# EUROPEAN PATENT SPECIFICATION

(11) **EP 3 222 403 B1**
(45) Date of publication and mention of the grant of the patent: **05.09.2018**
(21) Application number: 17160991.0
(22) Date of filing: 15.03.2017
(51) Int. Cl.: B29C 45/77, B29C 45/50

(54) **INJECTION UNIT**
INJEKTIONSEINHEIT
UNITÉ D'INJECTION

(30) Priority: 24.03.2016 JP 2016060668
(43) Date of publication of application: 27.09.2017
(73) Proprietor: Sumitomo Heavy Industries, Ltd., Tokyo 141-6025 (JP)
(72) Inventor: MATSUTAKE, Yoshitaka, Chiba-shi, Chiba 263-0001 (JP)
(74) Representative: Louis Pöhlau Lohrentz

(56) References cited:
- EP-A1- 0 752 303
- EP-A1- 1 741 538
- WO-A1-2014/021051
- JP-A- H01 238 917
- JP-A- 2000 117 789
- US-A- 5 129 808
- US-A1- 2010 062 095

## Description

### BACKGROUND OF THE INVENTION

### Field of the Invention

Certain embodiments of the present invention relate to an injection unit.

### Description of Related Art

An injection unit disclosed in Japanese Unexamined Patent Application Publication No. 2014-100864 includes a first support body to which a screw is fixed, a second support body to which a cylinder is fixed, a motor which is a drive source for driving the screw forward and backward, and a ball screw which converts a rotation motion by generated the motor to a linear motion and moves the first support body forward and backward. The ball screw includes a screw shaft which penetrates the first support body and a nut which is provided on the screw shaft and is fixed to the rear portion of the first support body.

The injection unit includes a load detector which detects a load applied to an injection member such as a screw so as to perform various controls. The load detector is provided in a force transmission path between the injection member and the drive source. Since the load detector is incorporated into the injection unit, a longitudinal dimension of the injection unit is long.

European Patent Application EP 1 741 538 A1 describes an injection molding machine in which a load cell is mounted between a pusher plate and a rotation-transmitting member on which an injection screw is fixedly mounted.

European Patent Application EP 752 303 A1 discloses a load cell that is arranged between a ball screw and a stationary platen.

### SUMMARY OF THE INVENTION

The present invention is made in consideration of the above-described problems, and an object thereof is to provide to an injection unit in which a longitudinal dimension can be shortened.

According to an aspect of the present invention, there is provided an injection molding machine, including: a cylinder in which a molding material is supplied to the inside; a front support to which a rear end portion of the cylinder is attached; an injection member which is rotatable and movable forward and backward inside the cylinder; a rotation drive portion which rotates the injection member; a rear support which supports the rotation drive portion and the injection member and moves forward and backward with respect to the front support behind the front support; and a load detector which is attached to the rear support before the rotation drive portion and detects a load which is applied to the injection member.

According to the aspect of the present invention, the injection unit in which a longitudinal dimension can be shortened is provided.

### BRIEF DESCRIPTION OF THE DRAWINGS

Fig. 1 is a side view of an internal structure of an injection molding machine on which an injection unit according to a first embodiment is mounted.
Fig. 2 is a side view of the injection molding machine on which the injection unit according to the first embodiment is mounted.
Fig. 3 is a top view of the injection molding machine on which the injection unit according to the first embodiment is mounted.
Fig. 4 is a side view showing a state where an injection unit according to a second embodiment is partially cut out.

### DETAILED DESCRIPTION OF THE INVENTION

Hereinafter, embodiments of the present invention will be described with reference to the drawings. However, in each drawing, the same or corresponding reference numerals are assigned to the same or corresponding configurations, and descriptions thereof are omitted.

### [First Embodiment]

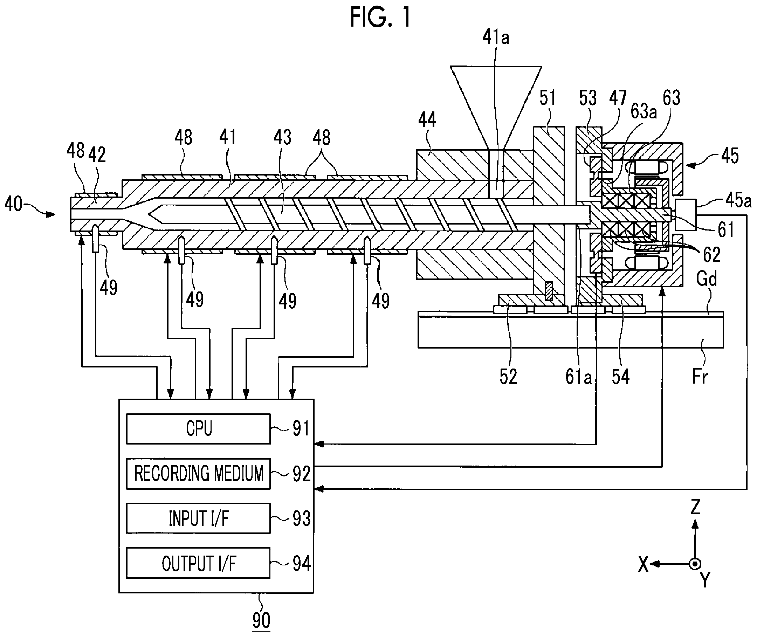

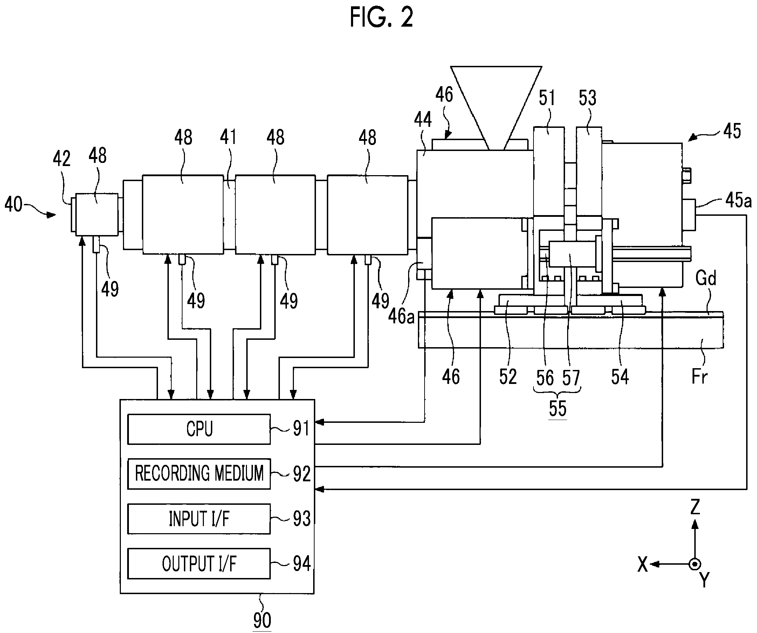

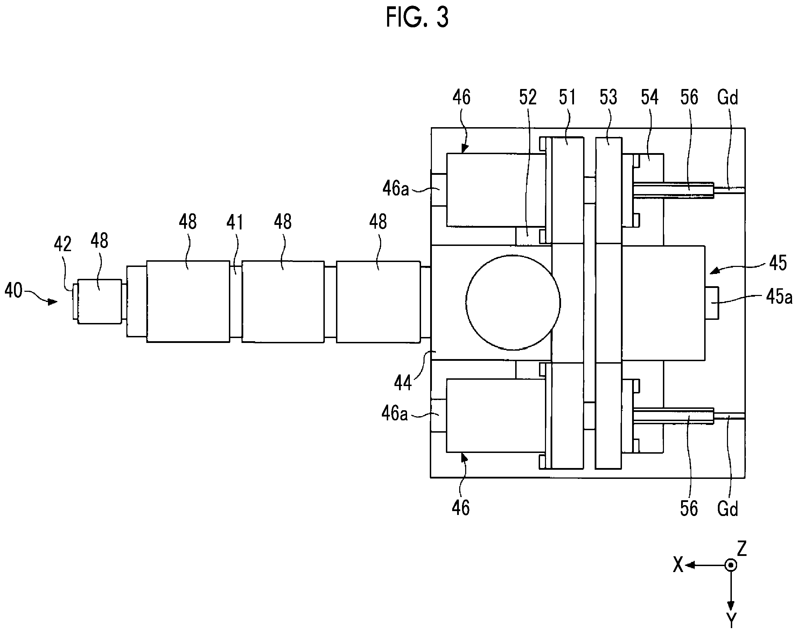

Fig. 1 is a side view of an internal structure of an injection molding machine on which an injection unit according to a first embodiment is mounted. Fig. 2 is a side view of the injection molding machine on which the injection unit according to the first embodiment is mounted. Fig. 3 is a top view of the injection molding machine on which the injection unit according to the first embodiment is mounted. In each drawing, a X direction, a Y direction, and a Z direction are directions perpendicular to each other, the X direction is an axial direction of a cylinder 41, the Y direction is a direction parallel to a fixed surface of a guide Gd on a frame Fr, and the Z direction is a direction perpendicular to the fixed surface of the guide Gd on the frame Fr.

The injection molding machine includes a frame Fr, an injection unit 40, and a controller 90. Hereinafter, a movement direction (left direction in Figs. 1 and 2) of a screw 43 during filling is referred to as a front side, and a movement direction (right direction in Figs. 1 and 2) of the screw 43 during plasticizing is referred to as a rear side.

The injection unit 40 is movable forward and backward with respect to the frame Fr, and is movable forward and backward with respect to the mold unit. The injection unit 40 is touched on the mold unit, and fills a cavity space inside the mold unit with a molding material. The molding material which fills the cavity space is cooled and solidified. Accordingly, a molding product is obtained. For example, the injection unit 40 includes the cylinder 41, a nozzle 42, the screw 43, a cooler 44, a plasticizing motor 45, an injection motor 46, a load detector 47, a heater 48, a temperature detector 49, or the like.

The cylinder 41 heats the molding material which is supplied from a supply port 41a to the inner portion of the cylinder 41. The supply port 41a is formed on the rear portion of the cylinder 41. The cooler 44 such as a water-cooling cylinder is provided on the outer periphery of the rear portion of the cylinder 41. The heater 48 such as a band heater and the temperature detector 49 are provided on the outer periphery of the cylinder 41 in front of the cooler 44.

The cylinder 41 is divided into a plurality of zones in an axial direction (right-left direction in Figs. 1 and 2) of the cylinder 41. The heater 48 and the temperature detector 49 are provided in each zone. The controller 90 controls the heater 48 such that a temperature which is actually measured by the temperature detector 49 becomes a setting temperature for each zone. The rear end portion of the cylinder 41 is attached to the front support 51. A front slider 52 to which the front support 51 is attached slides along the guide Gd which is fixed to the frame Fr.

The nozzle 42 is provided on the front end section of the cylinder 41 and is pressed by the mold unit. The heater 48 and the temperature detector 49 are provided on the outer periphery of the nozzle 42. The controller 90 controls the heater 48 such that an actually measured temperature of the nozzle 42 becomes a setting temperature.

The screw 43 is disposed to be rotatable and to be movable forward and backward in the cylinder 41. If the screw 43 rotates, the molding material is fed forward along spiral grooves of the screw 43. The molding material is gradually melted by heat from the cylinder 41 while being fed forward. The liquid molding material is fed to the front portion of the screw 43 and is accumulated in front of the cylinder 41, and thus, the screw 43 moves backward. Thereafter, if the screw 43 moves forward, the molding material in front of the screw 43 is injected from the nozzle 42, and the inner portion of the mold unit is filled with the liquid molding material. The screw 43 corresponds to an injection member described in claims.

The plasticizing motor 45 rotates the screw 43. As shown in Fig. 1, the plasticizing motor 45 is attached to the rear support 53 along with a bearing holder 63 which holds a bearing 62 which rotatably supports an output shaft 61 of the plasticizing motor45. A rear slider 54 to which the rear support 53 is attached slides along the guide Gd in the rear of the front slider 52. The plasticizing motor 45 corresponds to a rotation drive portion described in claims.

The output shaft 61 of the plasticizing motor 45 is disposed so as to be coaxial with an extension shaft of the screw 43. The output shaft 61 of the plasticizing motor 45 includes a fitting portion 61a which is fitted to the extension shaft of the screw 43 in front of the bearing 62. The fitting portion 61a has an insertion hole into which the extension shaft of the screw 43 is inserted, and the fitting portion 61a has a larger diameter than that of the extension shaft of the screw 43.

The injection motor 46 moves the screw 43 forward and backward. As shown in Fig. 2, the injection motor 46 is attached to the front support 51. A rotational motion of the injection motor 46 is converted into a linear motion of the rear support 53 with respect to the front support 51 by a movement conversion mechanism 55. The injection motor 46 corresponds to a forward-backward drive portion described in claims.

The movement conversion mechanism 55 includes a screw shaft 56 and a screw nut 57 which is screwed to the screw shaft 56. A ball or a roller may be interposed between the screw shaft 56 and the screw nut 57.

In Fig. 2, the screw shaft 56 is connected to the output shaft of the injection motor 46 and the screw nut 57 is fixed to the rear support 53. If the injection motor 46 is driven and the output shaft of the injection motor 46 rotates, the screw shaft 56 is rotated, and the screw nut 57 moves forward and backward. Accordingly, the rear support 53 or the screw 43 moves forward and backward.

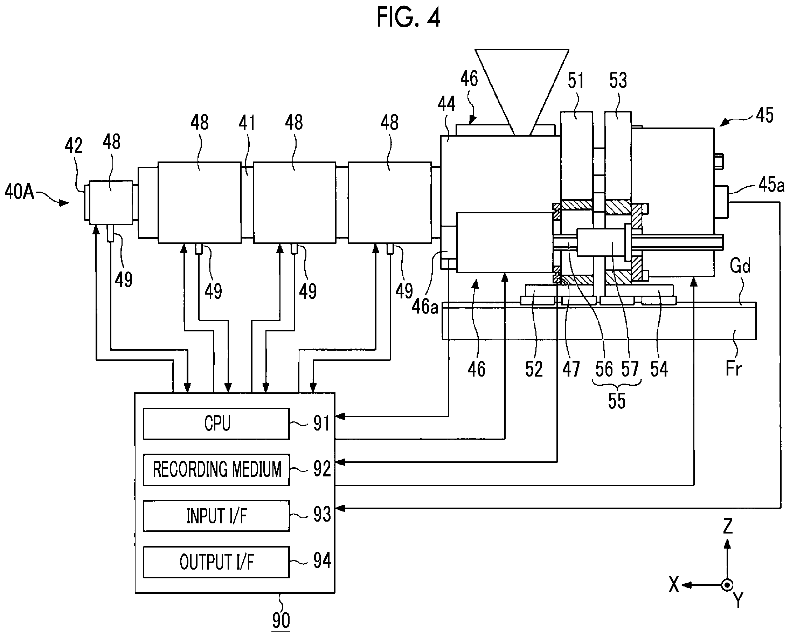

In addition, the dispositions of the screw shaft 56 and the screw nut 57 are not limited to the dispositions of Fig. 2. As the dispositions of the screw shaft 56 and the screw nut 57, for example, there are the dispositions of the following (1) or the dispositions of the following (2) in addition to the dispositions of Fig. 2. This is similarly applied to Fig. 4 described below.
(1) The screw nut 57 may be fixed to the output shaft of the injection motor 46 fixed to the front support 51, and the screw shaft 56 may be fixed to the rear support 53. In this case, if the injection motor 46 is driven and the output shaft rotates, the screw nut 57 rotates and the screw shaft 56 moves forward and backward. Accordingly, the rear support 53 or the screw 43 moves forward and backward.
(2) The front end section of the screw shaft 56 may be spline-connected to the output shaft of the injection motor 46 fixed to the front support 51, the rear end portion of the screw shaft 56 may be rotatably supported by the rear support 53, and the screw nut 57 may be fixed to the front support 51. In this case, if the injection motor 46 is driven and the output shaft rotates, the screw shaft 56 moves forward and backward while rotating. Accordingly, the rear support 53 or the screw moves forward and backward.

In addition, the injection motor 46 of the present embodiment is attached to the front support 51. However, the injection motor 46 may be attached to the rear support 53. According to the disposition of the injection motor 46, the dispositions of the screw shaft 56 and the screw nut 57 may be appropriately changed.

Moreover, the output shaft of the injection motor 46 of the present embodiment is disposed to be coaxial with the screw shaft 56 or the screw nut 57. However, the output shaft of the injection motor 46 may be disposed to be deviated from the screw shaft 56 or the screw nut 57. In this case, the rotational motion of the injection motor 46 is transmitted to the movement conversion mechanism 55 via a rotation transmission member such as a belt or a pulley.

As shown in Fig. 3, a plurality of sets of injection motors 46 or a plurality of sets of movement conversion mechanisms 55 may be used, and the injection motors 46 or the movement conversion mechanisms 55 may be provided on both sides in a state where the cylinder 41 is interposed therebetween. In addition, the number of the sets of the injection motors 46 or the movement conversion mechanisms 55 is not particularly limited, and the number of the sets may be one.

The load detector 47 is provided in a transmission path of a force between the injection motor 46 and the screw 43 and detects the load applied to the screw 43. For example, the load applied to the screw 43 from the molding material is transmitted to the load detector 47 via the extension shaft of the screw 43, the output shaft 61 of the plasticizing motor 45, the bearing 62, the bearing holder 63, or the like. Meanwhile, the drive force of the injection motor 46 which moves the screw 43 forward and backward is transmitted to the load detector 47 via the movement conversion mechanism 55, the rear support 53, or the like.

The load detector 47 transmits a signal indicating detection results to the controller 90. The detection results of the load detector 47 are used to control or monitor a pressure of the screw 43 which receives from the molding material, a back pressure with respect to the screw 43, a pressure which is applied from the screw 43 to the molding material, or the like.

As shown in Fig. 1 or 2, the controller 90 includes a Central Processing Unit (CPU) 91, a recording medium 92 such as a memory, an input interface 93, and an output interface 94. The controller 90 causes the CPU 91 to execute a program stored in the recording medium 92 so as to perform various controls. In addition, the controller 90 receives a signal from the outside by the input interface 93 and transmits the signal to the outside by the output interface 94. The controller 90 controls a filling process, a holding pressure process, a plasticizing process, or the like.

In the filling process, the injection motor 46 is driven so as to move the screw 43 forward at a setting speed, and the cavity space inside the mold unit is filled with the liquid molding material accumulated in front of the screw 43. For example, the position or the speed of the screw 43 is detected using an encoder 46a of the injection motor 46, or the like. The encoder 46a detects the rotation of the injection motor 46 and transmits the signal indicating the detection results to the controller 90. If the position of the screw 43 reaches a setting position, switching from the filling process to the holding pressure process (so called V/P switching) is performed. The setting speed of the screw 43 may be changed according to the position of the screw 43, time, or the like.

In addition, in the filling process, after the position of the screw 43 reaches the setting position, the screw 43 may temporarily stop at the setting position, and thereafter, the V/P switching may be performed. Immediately before the V/P switching, instead of stopping the screw 43, the screw 43 may move forward or may move backward at a very slow speed.

In the holding pressure process, the injection motor 46 is driven so as to press the screw 43 forward at a setting pressure, and a pressure is applied to the molding material which fills the cavity space inside the mold unit. Insufficient molding materials can be replenished by cooling shrinkage. For example, the pressure of the molding material is detected using the load detector 47.

In the holding pressure process, the molding material inside the cavity space is gradually cooled, and when the holding pressure process is completed, the inlet of the cavity space is closed by the solidified molding material. This state is referred to as a gate seal, and a backflow of the molding material from the cavity space is prevented. After the holding pressure process, a cooling process starts. In the cooling process, solidification of the molding material inside the cavity space is performed. In order to shorten a molding cycle, the plasticizing process may be performed during the cooling process.

In the plasticizing process, the plasticizing motor 45 is driven so as to rotate the screw 43 at a setting rotating speed, and the screw 43 feeds the molding material forward along the spiral grooves of the screw 43. According to this, the molding material is gradually melted. The screw 43 moves backward as the liquid molding material is fed to the front side of the screw 43 and is accumulated in the front portion of the cylinder 41. For example, the rotating speed of the screw 43 is detected by using an encoder 45a of the plasticizing motor 45. The encoder 45a sends a signal indicating the detection results to the controller 90.

In the plasticizing process, in order to restrict an abrupt rearward movement of the screw 43, the injection motor 46 may be driven so as to apply a setting back pressure to the screw 43. For example, the back pressure with respect to the screw 43 is detected by the load detector 47. If the screw 43 moves backward to the setting position and a predetermined amount of the molding materials is accumulated in front of the screw 43, the plasticizing process ends.

Meanwhile, as shown in Fig. 1, the load detector 47 of the present embodiment is attached to the rear support 53 in front of the plasticizing motor 45. For example, the load detector 47 is attached to both of a stepped portion which is formed on a wall surface of a through hole of the rear support 53 and a front surface of the bearing holder 63. Accordingly, a longitudinal position of the load detector 47 and a longitudinal position of the fitting portion 61a of the output shaft 61 can overlap each other, and it is possible to shorten the longitudinal dimension of the injection unit 40.

In addition, the shape of the rear support 53 or the shape of the bearing holder 63 is not particularly limited and the attachment position of the load detector 47 is not particularly limited as long as the longitudinal position of the load detector 47 and the longitudinal position of the fitting portion 61a of the output shaft 61 can overlap each other.

For example, in Fig. 1, the stepped portion which is formed on the wall surface of the through hole of the rear support 53 faces forward, and the rear surface of the load detector 47 is attached to the stepped portion which faces forward. However, the stepped portion may face backward, and the front surface of the load detector 47 may be attached to the stepped portion which faces backward.

In addition, in Fig. 1, a front flange portion 63a which is provided on the front end section of the bearing holder 63 is disposed behind the load detector 47 and the rear surface of the load detector 47 is attached to the front surface of the front flange portion 63a. However, the front flange portion 63a may be disposed before the load detector 47 and the front surface of the load detector 47 may be attached to the rear surface of the front flange portion 63a.

### [Second Embodiment]

Fig. 4 is a side view showing a state where an injection unit according to a second embodiment is partially cut out. Unlike the injection unit 40 of the first embodiment, in an injection unit 40A of the present embodiment, the injection motor 46 is attached to the front support 51 via the load detector 47. Hereinafter, differences between the injection unit 40 and the injection unit 40A will be mainly described.

The load detector 47 is provided in the transmission path of a force between the injection motor 46 and the screw 43 and detects the load applied to the screw 43. For example, the load applied to the screw 43 from the molding material is transmitted to the load detector 47 via the extension shaft of the screw 43, the output shaft 61 of the plasticizing motor 45, the bearing 62, the bearing holder 63, the rear support 53, the movement conversion mechanism 55, the injection motor 46, or the like.

The load detector 47 is attached to both of the front support 51 and the injection motor 46. For example, the load detector 47 is interposed between the front support 51 and the injection motor 46, and the front surface of the front support 51 is attached to the rear surface of the injection motor 46. Accordingly, the longitudinal position of the load detector 47 and the longitudinal position of the cylinder 41 or the cooler 44 can overlap each other, and it is possible to shorten the longitudinal dimension of the injection unit 40A.

In addition, the shape of the front support 51 or the shape of the injection motor 46 is not particularly limited and the attachment position of the load detector 47 is not particularly limited as long as the longitudinal position of the load detector 47 and the longitudinal position of the cylinder 41 or the cooler 44 can overlap each other.

For example, in Fig. 4, the load detector 47 is interposed between the first front support 51 and the injection motor 46. However, the load detector 47 may not be interposed therebetween. For example, a rear flange portion may be provided on the rear end portion of the injection motor 46, and the load detector 47 may be attached to the front surface of the rear flange portion and the front surface of the front support 51. Alternatively, the injection motor 46 may be inserted into the through hole of the front support 51, and the load detector 47 may be attached to the front surface of the injection motor 46 and the front surface of the front support 51.

In addition, the injection motor 46 of the present embodiment is attached to the front support 51. However, the injection motor 46 may be attached to the rear support 53. In this case, the load detector 47 may be attached to both of the rear support 53 and the injection motor 46.

Moreover, the plasticizing motor 45 of the present embodiment is supported by the rear support 53 and can move forward and backward with respect to the frame Fr. However, the plasticizing motor 45 may be fixed to the frame Fr further behind the rear support 53. In the case of the latter, the output shaft of the plasticizing motor 45 is spline-connected to the extension shaft of the screw 43.

In addition, the output shaft of the plasticizing motor 45 of the present embodiment is disposed to be coaxial with the extension shaft of the screw 43. However, the output shaft of the plasticizing motor 45 may be disposed to be deviated from the extension shaft of the screw 43. In the case of the latter, the rotational motion of the plasticizing motor 45 is transmitted to the screw 43 via a rotation transmission member such as a belt or a pulley.

Hereinbefore, the embodiments or the like of the injection molding machine is described. However, the present invention is not limited to the above-described embodiments or the like. Various modifications and improvement may be applied to the present invention within the scope which does not depart from the concept of the present invention described in claims.

For example, the injection unit 40 of the above-described embodiment is a horizontal type injection unit in which the axial direction of the cylinder 41 is a horizontal direction. However, the injection unit 40 may be a vertical type injection unit in which the axial direction of the cylinder 41 is a vertical direction.

The injection unit 40 of the above-described embodiment is an inline-screw type injection unit and the screw corresponds to an injection member described in claims. However, the present invention is not limited to this. For example, the injection unit 40 may be a pre-plasticizing type injection unit. In the pre-plasticizing type injection unit, a molding material melted in a plasticization cylinder is supplied to the injection cylinder, and the molding material is injected from the injection cylinder into a mold unit. A screw is disposed in the plasticization cylinder to be rotatable or to be rotatable and movable forward and backward, and a plunger is disposed in the injection cylinder to be movable forward and backward. At least one of the screw and the plunger corresponds to an injection member described in claims.

### Brief Description of the Reference Symbols

40: injection unit, 41: cylinder, 42: nozzle, 43: screw, 45: plasticizing motor, 46: injection motor, 47: load detector, 51: front support, 53: rear support, 61: output shaft, 62: bearing, 63: bearing holder, 90: controller

## Claims

1. An injection molding machine, comprising:
a cylinder (41) in which a molding material is supplied to the inside;
a front support (51) to which a rear end portion of the cylinder (41) is attached;
an injection member (43) which is rotatable and movable forward and backward inside the cylinder (41);
a plasticizing motor (45) which rotates the injection member (43);
a rear support (53) which supports a bearing holder (63) that holds a bearing (62), which rotatably supports an output shaft (61) of the plasticizing motor (45), and the injection member (43) and moves forward and backward with respect to the front support (51) behind the front support (51); and
a load detector (47) which is attached to a front surface of the bearing holder (63) and the rear support (53) and detects a load which is applied to the injection member (43).

2. The injection molding machine according to Claim 1,
wherein the load detector (47) is attached to a stepped portion of the rear support (53) and the front surface of the bearing holder (63).

3. An injection molding machine, comprising:
a cylinder (41) in which a molding material is supplied to the inside;
a front support (51) to which a rear end portion of the cylinder (41) is attached;
an injection member (43) which is movable forward and backward inside the cylinder (41);
a rear support (53) which supports the injection member (43) and moves forward and backward with respect to the front support (51) behind the front support (51);
an injection motor (46) which is attached to one of the front support (51) and the rear support (53), and moves the rear support (53) with respect to the front support (51) to move the injection member (43) forward and backward; and
a load detector (47) which is attached to one of the front support (51) and the rear support (53) and the injection motor (46) and detects a load which is applied to the injection member (43).

## Patentansprüche

1. Spritzgießmaschine, umfassend:
einen Zylinder (41), in dem ein Gießmaterial zur Innenseite zugeführt wird;
eine vordere Stütze (51), an der ein rückwärtiger Endabschnitt des Zylinders (41) angebracht ist;
ein Spritzglied (43), das innerhalb des Zylinders (41) vorwärts und rückwärts drehbar und beweglich ist;
einen Plastifizierungsmotor (45), der das Spritzglied (43) dreht;
eine rückwärtige Stütze (53), die einen Lagerhalter (63), der ein Lager (62) hält, welches eine Abtriebswelle (61) des Plastifizierungsmotors (45) drehbar stützt, und das Spritzglied (43) stützt und sich bezüglich der vorderen Stütze (51) hinter der vorderen Stütze (51) vorwärts und rückwärts bewegt; und
einen Lastdetektor (47), der an einer Vorderfläche des Lagerhalters (63) und der rückwärtigen Stütze (53) angebracht ist und eine Last detektiert, die auf das Spritzglied (43) ausgeübt wird.

2. Spritzgießmaschine nach Anspruch 1,
wobei der Lastdetektor (47) an einem abgestuften Abschnitt der rückwärtigen Stütze (53) und der Vorderfläche des Lagerhalters (63) angebracht ist.

3. Spritzgießmaschine, umfassend:
einen Zylinder (41), in dem ein Gießmaterial zur Innenseite zugeführt wird;
eine vordere Stütze (51), an der ein rückwärtiger Endabschnitt des Zylinders (41) angebracht ist;
ein Spritzglied (43), das innerhalb des Zylinders (41) vorwärts und rückwärts beweglich ist;
eine rückwärtige Stütze (53), die das Spritzglied (43) stützt und sich bezüglich der vorderen Stütze (51) hinter der vorderen Stütze (51) vorwärts und rückwärts bewegt;
einen Einspritzmotor (46), der an einer der vorderen Stütze (51) und der rückwärtigen Stütze (53) angebracht ist und die rückwärtige Stütze (53) bezüglich der vorderen Stütze (51) bewegt, um das Spritzglied (43) vorwärts und rückwärts zu bewegen; und
einen Lastdetektor (47), der an einer der vorderen Stütze (51) und der rückwärtigen Stütze (53) und dem Einspritzmotor (46) angebracht ist und eine Last detektiert, die auf das Spritzglied (43) ausgeübt wird.

## Revendications

1. Machine de moulage par injection, comprenant :
un cylindre (41) dans lequel un matériau de moulage est amené à l'intérieur ;
un support avant (51) auquel une partie d'extrémité arrière du cylindre (41) est fixée ;
un élément d'injection (43) qui peut tourner et se déplacer vers l'avant et vers l'arrière à l'intérieur du cylindre (41) ;
un moteur de plastification (45) qui fait tourner l'élément d'injection (43) ;
un support arrière (53) qui supporte un support de palier (63) qui maintient un palier (62), qui supporte en rotation un arbre de sortie (61) du moteur de plastification (45), et l'élément d'injection (43) et se déplace vers l'avant et vers l'arrière par rapport au support avant (51) derrière le support avant (51) ; et
un détecteur de charge (47) qui est fixé à une surface avant du support de palier (63) et au support arrière (53) et détecte une charge qui est appliquée sur l'élément d'injection (43).

2. Machine de moulage par injection selon la revendication 1,
dans laquelle le détecteur de charge (47) est fixé sur une partie étagée du support arrière (53) et la surface avant du support de palier (63).

3. Machine de moulage par injection comprenant :
un cylindre (41) dans lequel un matériau de moulage est amené à l'intérieur ;
un support avant (51) auquel une partie d'extrémité arrière du cylindre (41) est fixée ;
un élément d'injection (43) qui est mobile vers l'avant et vers l'arrière à l'intérieur du cylindre (41) ;
un support arrière (53) qui supporte l'élément d'injection (43) et se déplace vers l'avant et vers l'arrière par rapport au support avant (51) derrière le support avant (51) ;
un moteur d'injection (46) qui est fixé à l'un parmi le support avant (51) et le support arrière (53), et déplace le support arrière (53) par rapport au support avant (51) pour déplacer l'élément d'injection (43) vers l'avant et vers l'arrière ; et
un détecteur de chaleur (47) qui est fixé sur l'un parmi le support avant (51) et le support arrière (53) et le moteur d'injection (46) et détecte une charge qui est appliquée sur l'élément d'injection (43).
